Europäisches Patentamt

European Patent Office

Office européen des brevets

(11) Publication number: **0 018 121**
A1

# EUROPEAN PATENT APPLICATION

(21) Application number: 80301008.1

(22) Date of filing: 31.03.80

(51) Int. Cl.³: **F 17 C 13/04, F 16 K 1/30**

(30) Priority: 11.04.79 DK 1516/79

(43) Date of publication of application: 29.10.80
Bulletin 80/22

(84) Designated Contracting States: BE DE FR GB IT NL

(71) Applicant: KOSAN TEKNOVA A/S, Mollevej,
Dk-2990 Niva (DK)

(72) Inventor: Hansen, Frits Palle Ulrich, No. 2 Peder Oxesvej,
DK-2960 Rungsted Kyst (DK)
Inventor: Hansen, Kurt, No. 6 Grundtvigsvej,
DK-3000 Helsingor (DK)
Inventor: Bonne, Adam, No. 324 Toftegardsvaenget,
Dk-3480 Fredensborg (DK)

(74) Representative: Brown, David Alan et al, MATHYS &
SQUIRE 10 Fleet Street, London EC4Y 1AY (GB)

(54) A valve unit for pressurized gas vessels, particularly liquefied gas bottles.

(57) In a valve unit for liquefied gas bottles and similar pressurized gas vessels and comprising two valves (8, 10) positioned in the flow passage, the external valve (8) is a check valve mounted in a separate top section (2) of the casing, while the other valve (10) is positioned in the main body (1) of the casing and is adapted to be opened and closed by means of a manual adjusting mechanism (11, 13, 15) which, if desired, may further be equipped with a safety valve (16).

EP 0 018 121 A1

ACTORUM AG

A Valve Unit for pressurized Gas Vessels, particularly
liquefied Gas Bottles.

The valve unit mounted on the top of a liquefied
gas bottle generally comprises a check valve that is
forced open  by or subsequent to the mounting of a
discharge regulator through which the gas bottle is
connected to a gas consuming apparatus. It is intended
that the valve shall close automatically at the removal
of the regulator, but the conditions may be so that
the valve fails because it is prevented from being
fully closed as a consequence of impurities, such as
grains of sand, thereby involving the risk of a gas
explosion.

To eliminate such a risk it has been suggested to
build in an extra check valve coupled in series with the
first one and acting in the same way. The idea forming
the basis of this proposal is that the first valve normally may be expected to operate perfectly in its closed
position, even if the other valve fails, so the risk
of leakage is in practice considered rather insignificant.

Taking this prior art as a starting point, the
present invention relates to a valve unit for pressurized gas vessels, in particular liquefied gas bottles,
comprising a casing with a flow passage provided with
an external check valve and an additional valve
positioned upstream of the first one and adapted to be
closed by a movement in the same direction. According
to the invention such a valve unit is characterised
in that the external valve is mounted within a
separate detachable top section of the casing, and in
that the additional valve is manually adjustable
between its open and closed positions.

In this case it is not only intended to eliminate
the risk of leakage (on the assumption that the additional valve is closed when no gas shall be drawn off
from the vessel), but it is also an aim to provide for a quick and cheap repairing in case the external valve shall be changed due to wear, of if the device has been mechanically damaged, such damage usually affecting the top of the casing. Damages have so far necessitated unscrewing of the entire valve unit from the gas bottle or vessel whereas the particular design according to the invention makes it sufficient, after closing of the additional valve, to replace the separate top section including the external valve.

The additional valve may appropriately be adjustable by means of a grip or handle associated with an eccentric bushing which comprises a third valve acting as a safety valve. The grip may in an ordinary way serve as a clearly visible indication as to whether the additional valve is open or closed, and when the eccentric bushing is at the same time utilized to house the safety valve, an extra connection for such a safety valve can be saved. If desired, the safety valve, if present, may however also be connected in an ordinary way with the flow passage via a separate side port.

Especially with a view to compensation for wear of the additional valve and its adjusting mechanism, this additional valve may appropriately according to the invention be urged by a spring towards its closed position and be adapted to be opened, and to be kept open, while overcoming the force of the spring. Such a spring force reduces, moreover, the necessity of close manufacturing tolerances.

In the following, an embodiment of the valve unit according to the invention is more specifically explained with reference to the drawings, in which

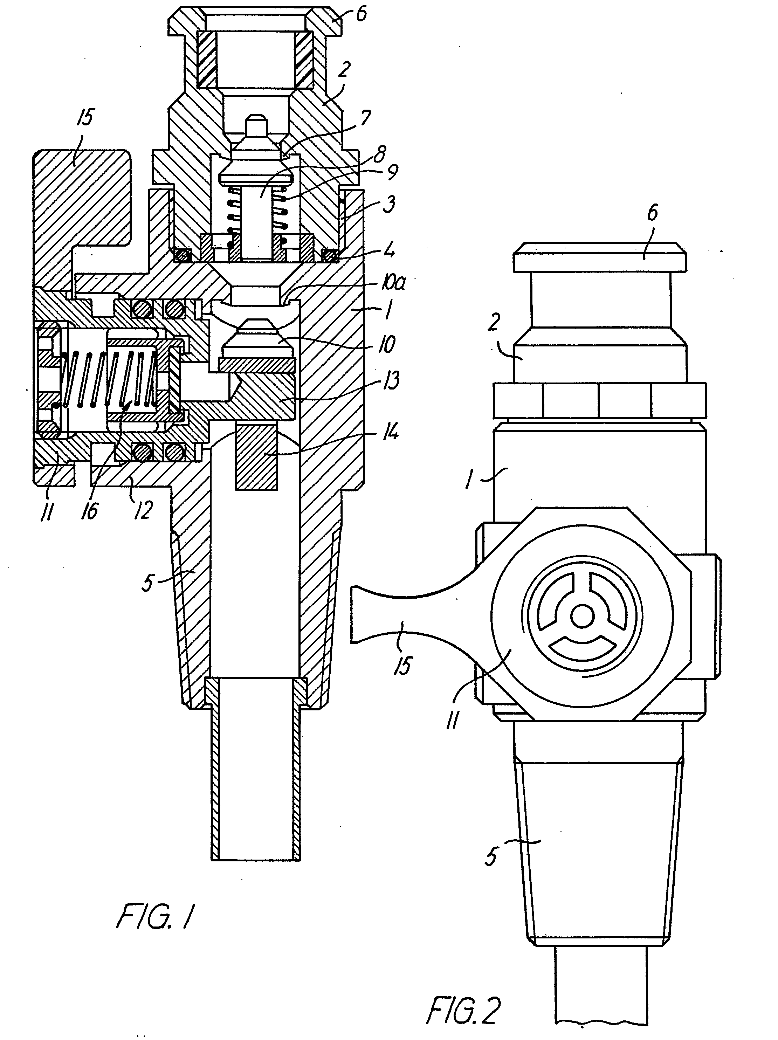

Fig. 1 is an axial sectional view of the valve unit illustrating the additional valve when open, and

Fig. 2 is a side elevation of the unit with the additional valve in its closed position.

The gas bottle valve shown on the drawings comprises a casing that is constituted of a main body 1 and a separate top section 2 which through a screw thread 3 is screwed firmly into the main body 1, a gasket 4 being inserted to guarantee a tight sealing between the two members. At its bottom the body 1 terminates in a conical, screw-threaded nipple 5 to be firmly screwed into a gas bottle. The top section 6 terminates at its top in an ordinary collar which makes it possible to mount a discharge regulator with a hose connection to a gas consuming apparatus.

The top section 2 comprises a seat 7 for a check valve 8 which is urged against its closed position by the gas pressure below said valve and, if desired, by an adjustable compression spring 9.

Below the valve 8 the main body 1 is equipped with an additional valve 10 which is also adapted to close in the direction of the gas flow, viz. against a seat 10a in the body member 1. This valve 10 that can also be spring-urged in its closing direction as mentioned above, is adjustable by means of a rotatable bushing 11 which is tightly journalled in a lateral extension 12 on the main body 1 and on its inner end is provided with an eccentric pin 13 extending into a bore in the stem 14 of the valve 10. The rotatable bushing 11 is further provided with an external grip 15 serving as an indication as to whether the valve 10 is open or closed.

In the illustrated embodiment the rotatable bushing 11 also houses an ordinary safety valve 16.

PATENT CLAIMS

1. A valve unit for pressurized gas vessels, in particular liquefied gas bottles, comprising a casing (1,2) with a flow passage provided with an external check valve (8) and an additional valve (10) positioned upstream of the first one and adapted to be closed by movement in the same direction, characterised in that the external valve (8) is mounted within a separate, detachable top section (2) of the casing, and in that the additional valve (10) is manually adjustable between its open and closed positions.

2. A valve unit according to claim 1, characterised in that the additional valve (10) is adjustable by means of a grip or handle (15) associated with an eccentric bushing (11,13) which comprises a third valve acting as a safety valve (16).

3. A valve unit as claimed in claim 1 or 2, characterised in that the additional valve (10) is spring-urged against its closed position and is adapted to be opened, and to be kept open, while overcoming the force of the spring.

0018121

1/1

FIG. 1

FIG. 2

## DOCUMENTS CONSIDERED TO BE RELEVANT

| Category | Citation of document with indication, where appropriate, of relevant passages | Relevant to claim |
|---|---|---|
| | US - A - 2 602 466 (D. MAPES) | 1-3 |
| | * Column 1, lines 1-4, 29-38; column 2, line 8 - column 5, line 14; figures 1,2 * | |
| | --- | |
| | FR - A - 1 587 675 (A. LE CHERPIE) | 1-3 |
| | * Page 1, lines 13-26; page 4, line 33 - page 2, line 38; figures 1,2 * | |
| | --- | |
| A | US - A - 3 479 005 (P.A. DE GRAAF) | |
| | * Figure 4 * | |
| | ---- | |

**CLASSIFICATION OF THE APPLICATION (Int. Cl. 3)**

F 17 C 13/04
F 16 K 1/30

**TECHNICAL FIELDS SEARCHED (Int.Cl. 3)**

F 17 C 13/04
F 16 K 1/30
F 16 L 37/28

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| THE HAGUE | 30-06-1980 | SIEM |

EPO Form 1503.1 06.78